# EUROPÄISCHE PATENTSCHRIFT

(11) **EP 3 198 185 B1**
(45) Veröffentlichungstag und Bekanntmachung des Hinweises auf die Patenterteilung: **31.10.2018**
(21) Anmeldenummer: 15748005.4
(22) Anmeldetag: 30.07.2015
(51) Int. Cl.: F17C 1/00, F17C 1/12

(54) **BEHÄLTER ZUR KRYOGENEN SPEICHERUNG VON KRAFTSTOFF**
CONTAINER FOR THE CRYOGENIC STORAGE OF FUEL
RÉCIPIENT DE STOCKAGE CRYOGENIQUE DE COMBUSTIBLE

(30) Priorität: 25.09.2014 DE 102014219425
(43) Veröffentlichungstag der Anmeldung: 02.08.2017
(73) Patentinhaber: Bayerische Motoren Werke Aktiengesellschaft, 80809 München (DE)
(72) Erfinder: SZOUCSEK, Klaus, 85778 Haimhausen (DE); LANDECK, Bastian, 82008 Unterhaching (DE)
(86) Internationale Anmeldenummer: PCT/EP2015/067558
(87) Internationale Veröffentlichungsnummer: WO 2016/045834

(56) Entgegenhaltungen:
- DE-A1-102005 035 647
- FR-A5- 2 091 139
- US-A- 3 304 728
- US-A1- 2002 008 111

## Beschreibung

Die Erfindung betrifft einen druckfesten Behälter, insbesondere einen Kryotank, insbesondere zur Speicherung von kondensiertem Gas, insbesondere zur Versorgung einer ein Kraftfahrzeug antreibenden Brennkraftmaschine mit Kraftstoff, nach dem Oberbegriff des ersten Anspruchs. Zum technischen Umfeld wird neben der DE 10 2007 057 978 B1 noch auf die DE 2 022 774 A1 verwiesen. In solchen thermisch sehr gut isolierten, druckdichten Behältern wird zum Beispiel in einem Fahrzeug tiefkalter, flüssiger Wasserstoffvorrat in kryogenem Zustand unter überkritischem Druck, bei 13 bar oder mehr, gespeichert.

Bei dieser kryogenen Kraftstoffspeicherung bildet sich jedoch durch Wärmeeintrag in den Kraftstoff-Behälter so genanntes blow-off-Gas, das ab einem bestimmten Tank-Innendruck abgeblasen werden muss. Insbesondere wenn kein Verbraucher für den Kraftstoff in Betrieb ist, d.h. insbesondere dann, wenn die Brennkraftmaschine außer Betrieb ist, steigt als Folge des Wärmeeintrags der Tank-Innendruck an. Aus Sicherheitsgründen muss dieser Druck durch Öffnen von Ventilen begrenzt werden. Im Allgemeinen wird dabei das blow-off-Gas über Abblasleitungen, in denen diese Ventile vorgesehen sind, in die Umgebung abgegeben. Es ist auch möglich, das blow-off-Gas zu einem Verwertungssystem zu leiten und dort mit Luftsauerstoff mittels eines Katalysators zu Wasserdampf zu verbrennen. Die Zuleitung zum Verwertungssystem kann dann das Abblasventil enthalten und eventuell weitere Komponenten wie Filter oder Verschraubungen. Hier ist es vorteilhaft, wenn zur Abdichtung Elastomerdichtungen verwendet werden können. Dies allerdings nur, wenn diese nicht zu kalt werden, da sie derzeit im Temperaturbereich ab minus 50 Grad Celsius und kälter gegenüber Wasserstoff nicht mehr zuverlässig abdichten.

Es sind auch Einrichtungen zur Verringerung der blow-off-Gase mittels eines Wärmekontakts zu Kühlschilden bekannt, die den Wärmeeinfall in den Kraftstoff-Behälter mit dem kryogen gespeicherten Kraftstoff verzögern. Hier ist zum Beispiel die DE 10 2005 035 647 A1 zu nennen. Ein solches Kühlschild, das vom abzublasenden Wasserstoff kaltgehalten wird, erwärmt diesen natürlich zwangsläufig, was seine Verwendung in einem Verwertungssystem, wie oben beschrieben, begünstigt.

Ferner ist in dem Britischen Patent 1,096,748 ein isolierter, doppelwandiger Speicherbehälter mit Kühlschild ausgebildet, das über Kupferscheiben im Dom des Behälters in wärmeleitendem Kontakt mit einer Abblasleitung steht. Das Kühlschild umgibt den kompletten Behälter. Ein solcher Behälter ist in der Herstellung sehr aufwändig und daher nicht preisgünstig zu montieren. Außerdem ist der Wärmeaustausch zwischen Kühlschild und Abblasleitung aufgrund der geringen Berührfläche dieser Elemente über die Kupferscheiben zu gering, um den abzublasenden Wasserstoff so erwärmen zu können, dass dieser einem Verwertungssystem, wie oben beschrieben, zugeführt werden kann.

Eine Abhilfemaßnahme für die geschilderte Problematik aufzuzeigen, ist Aufgabe der vorliegenden Erfindung, vor dem Hintergrund des nächstliegenden Standes der Technik, der US 2002/0008111 A1, die einen Behälter beschreibt, gebildet von einem Außenbehälter und einem Innenbehälter zylindrischen Querschnitts mit domförmigen Enden, wobei in dem Zwischenraum zwischen Außenbehälter und Innenbehälter wenigstens eine Superisolation und eine Einrichtung vorgesehen ist, die wenigstens aus einem von außerhalb des Behälters im Bereich eines Domes durch den Außenbehälter und die Superisolation hindurch in den Innenbehälter führenden Rohr besteht, wobei das Rohr am Innenumfang des Außenbehälters über eine Befestigungseinrichtung, an diesem wenigstens teilweise entlang verlaufend, befestigt ist.

Die Abhilfemaßnahme soll bewirken, dass der abzublasende Wasserstoff, zwischen Außen- und Innenbehälter, durch die Wärme der Behälterumgebung mehr erwärmt wird.

Diese Aufgabe wird erfindungsgemäß mit den Merkmalen des Anspruchs 1 gelöst. Eine vorteilhafte Aus- und Weiterbildung ist Inhalt des abhängigen Anspruchs.

Nach der Erfindung ist ein Behälter zur tiefkalten, kryogenen Speicherung von Kraftstoff, gebildet von einem Außenbehälter und einem Innenbehälter zylindrischen Querschnitts mit domförmigen Enden, mit einem Zwischenraum zwischen Außenbehälter und Innenbehälter in dem wenigstens eine Superisolation und eine Einrichtung zum Befüllen und Entnehmen und Abblasen gasförmigen Kraftstoffs in den und aus dem Behälter vorgesehen ist, die wenigstens aus einem von außerhalb des Behälters im Bereich eines Domes durch den Außenbehälter und die Superisolation hindurch in den Innenbehälter führenden Rohr besteht, wobei das Rohr am Innenumfang des Außenbehälters über eine Befestigungseinrichtung, an diesem wenigstens teilweise entlang verlaufend, so befestigt ist, dass sich, während eines Abblasvorgangs, das Rohr durchströmender, abzublasender Kraftstoff durch Wärmeleitung vom Außenbehälter her über die Befestigungseinrichtung so erwärmt, dass der Kraftstoff einem Verwertungssystem außerhalb des Behälters zugeführt werden kann, das wenigstens Leitungen besitzt, die für tiefkalten Kraftstoff nicht geeignet sind, wobei die Befestigungseinrichtung so gestaltet ist, dass das Rohr in Behälterquerrichtung verschieblich zum Außenbehälter (3) an diesem befestigt ist, dadurch gekennzeichnet, dass das Rohr mittels in Behälterquerrichtung gegeneinander verschieblichen Wärmeleitelementen am Außenbehälter befestigt ist.

Ein über eine so wärmeleitende Befestigungseinrichtung am Innenumfang des Außenbehälters befestigtes und dort wenigstens teilweise entlang verlaufendes Rohr zum Abblasen von ursprünglich tiefkaltem Kraftstoff, dass sich dieser beim Durchströmen des Rohrs auf wenigstens minus 40 Grad Celsius erwärmt, also nicht mehr tiefkalt ist, hat den Vorteil, dass im weiteren Verlauf der Abblaseinrichtung konventionelle Elastomerdichtungen verwendet werden können. Auf so einfache Weise auf eine nicht mehr tiefkalte Temperatur gebrachter Kraftstoff ist dann zur weiteren Verwendung in einem Verwertungssystem aufbereitet. Über die Länge des Rohrs, seine Wärmeleitfähigkeit, sowie die der Befestigungseinrichtung kann vorteilhafterweise eine gewünschte Kraftstofftemperatur eingestellt werden.

Dies zum Beispiel, bei einer vorteilhaften Ausführung der Erfindung, in einem Behälter, der ein Kryodruck-Tank ist, in dem kryogener Wasserstoff zur Versorgung eines Verbrauchers, insbesondere einer Brennkraftmaschine und/oder einer Brennstoffzelle eines Kraftfahrzeugs, unter überkritischem Druck bei 13 bar oder mehr gespeichert werden kann. Dabei ist es von Vorteil, wenn der thermische Kontakt der sich berührenden Oberflächen der Befestigungseinrichtung auf einfache Weise mittels vakuumraumtauglicher Zusatzmittel verbessert wird, zum Beispiel durch spezielle doppelseitige Klebebänder mit definiert guten Wärmeleiteigenschaften. In Dombereichen kann dazu auch bisher ungenutzter Bauraum des Außenbehälters genutzt werden, was zu einer Verkleinerung des Volumens des Vakuumraums führt und damit eine Verkürzung des Evakuierungsvorgangs bei der Herstellung des Kraftstoffbehälters bewirkt.

Die Befestigungseinrichtung ist so gestaltet, dass das Rohr in Behälterquerrichtung verschieblich zum Außenbehälter an diesem befestigt ist, wobei das Rohr mittels in Behälterquerrichtung gegeneinander verschieblichen Wärmeleitelementen am Außenbehälter befestigt ist. Die Wärmeleitelemente, deren Verschieblichkeit zueinander ein Auftreten von Materialspannungen aufgrund von Wärmedehnung verhindert, sind vorteilhafterweise aus einem gut wärmeleitenden Material, zum Beispiel aus Aluminium.

Im Folgenden wird die Erfindung anhand eines bevorzugten Ausführungsbeispiels weiter erläutert. Es zeigen:
- Figur 1:: Eine räumliche Teilansicht eines erfindungsgemäßen Kraftstoffbehälters mit am Dom geöffnetem Außenbehälter und damit sichtbarem dort befestigten Rohr zum Abblasen gasförmigen Kraftstoffs aus dem Behälter und

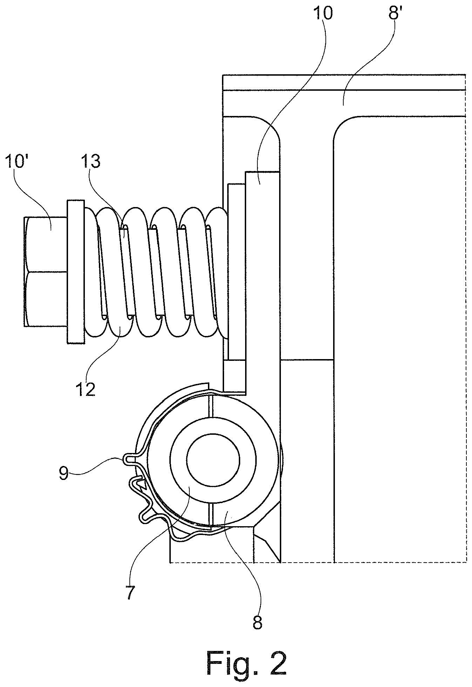

- Figur 2:: einen Teilquerschnitt durch die Wärmeleitelemente der Befestigungseinrichtung für das Rohr aus Figur 1.

In beiden Figuren sind gleiche Elemente mit den gleichen Bezugsziffern bezeichnet und erfindungswesentlich können sämtliche näher beschriebenen Merkmale sein.

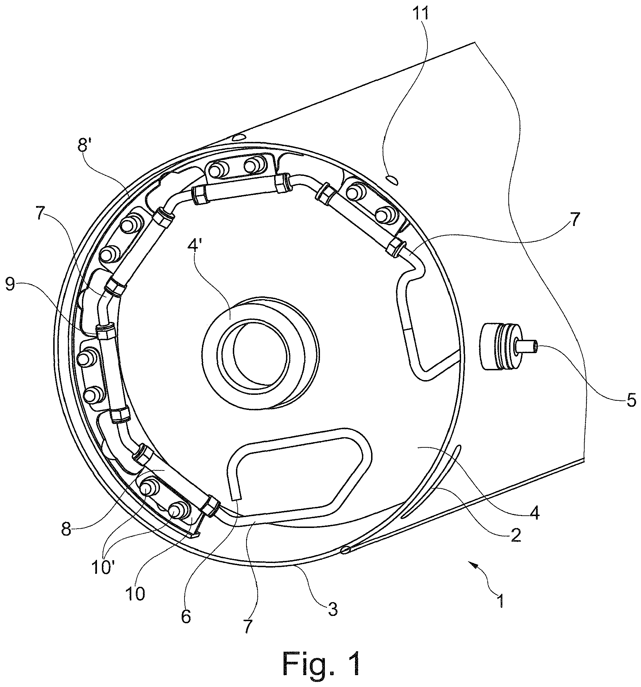

In einem nicht gezeichneten Kraftfahrzeug ist ein Behälter 1 zur tiefkalten, kryogenen Speicherung von Wasserstoff als Kraftstoff eingebaut. Dieser dient zur Versorgung einer das Kraftfahrzeug antreibenden, nicht gezeichneten, Brennkraftmaschine. Der Behälter 1 ist gasflaschenartig lang gestreckt, nur teilweise in seiner Länge gezeichnet und besteht aus einem druckfesten Innenbehälter 4 aus faserverstärktem Material mit innenliegender, gasdichter Druckflasche 4'. Das Ganze in einem Außenbehälter 3, mit dazwischen liegender, nicht gezeichneter Isolationsschicht. In der Ansicht nach Figur 1 ist der Innenbehälter 4 nur sichtbar, weil ein Dom, der als Deckel den Außenbehälter 3 luftdicht verschließt und die darunter liegende Isolationsschicht entfernt sind. Im Mantel des Außenbehälters 3 ist eine Öffnung 2 sichtbar, diese dient, druckdicht abgedichtet, der Durchführung einer nicht gezeichneten Entnahmeleitung und einer nicht gezeichneten Befüllleitung für Wasserstoff in kryogenem Zustand. Eine zu einem nicht gezeichneten Abblasventil führende Abblasleitung 7 für gasförmigen Wasserstoff, zur Vermeidung von zu großer Druckerhöhung im Behälter 1, durchdringt den Innenbehälter 4 am Gaseingang 6 und die nicht gezeichnete Superisolation und den Außenbehälter 3 am Gasausgang 5. Die Abblasleitung 7 besteht aus einem Rohr zur Gasführung, das über etwa drei Viertel des Innenumfangs des Außenbehälters 3, an diesem entlang verlaufend, über eine Befestigungseinrichtung befestigt ist. Diese besteht aus abschnittsweise das Rohr berührend umgebenden inneren Wärmeleitelementen 8, die jeweils an ihren Enden mittels Klemmelementen 9 am Rohr festgelegt sind. Über einen Befestigungsflansch 10 ist jedes innere Wärmeleitelement 8 mittels zweier Schrauben 10' an einem einzigen kreisförmigen äußeren Wärmeleitelement 8' angebracht, dessen Außenumfang in wärmeübertragendem Kontakt zum Innenumfang des Außenbehälters 3, an diesem, über eine entsprechende Passung und einzelne Schweißpunkte 11, befestigt ist. Mittels Federn 12, die auf die Bolzen 13 der Schrauben 10' geschoben sind, bringen diese eine definierte Spannkraft auf inneres und äußeres Wärmeleitelement 8, 8' auf, was sowohl die Quantität des Wärmeübergangs zwischen innerem und äußerem Wärmeleitelement 8, 8' einstellen lässt, als auch eine Verschieblichkeit dieser beiden Teile gegeneinander in Radialrichtung des Behälters 1 gewährleistet. Letzteres vermeidet ein Entstehen von Spannungen aufgrund unterschiedlicher Wärmedehnung der verschiedenen Werkstoffe und sich laufend ändernder Werkstofftemperaturen beim Abblasen von tiefkaltem Wasserstoff aus dem Behälter 1. Auch bedingt durch die nachfolgende Erwärmung des Wasserstoffs im Rohr, letztlich über dieses und die Wärmeleitelemente 8, 8'. Aufgrund einer Einstellung der Wärmeübertragung über die Wärmeleitelemente 8, 8', auch über deren Baugröße, wobei die Wärmeübertragung eine Erwärmung des abzublasenden Wasserstoffs auf eine nicht mehr tiefkalte Temperatur, wärmer als minus 40 Grad Celsius, bewirken soll, können Dichtelemente der Abblaseinrichtung außerhalb des Außenbehälters 3 aus herkömmlichem Elastomer bestehen und der abgeblasene Wasserstoff kann so auf einfache Weise einem nicht gezeichneten Verwertungssystem zugeleitet werden, das diesen zum Beispiel mittels Luftsauerstoff und eines Katalysators zu Wasserdampf verbrennt.

## Patentansprüche

1. Behälter (1) zur tiefkalten, kryogenen Speicherung von Kraftstoff, gebildet von einem Außenbehälter (3) und einem Innenbehälter (4) zylindrischen Querschnitts mit domförmigen Enden, wobei in dem Zwischenraum zwischen Außenbehälter (3) und Innenbehälter (4) wenigstens eine Superisolation und eine Einrichtung zum Befüllen und Entnehmen und Abblasen gasförmigen Kraftstoffs in den und aus dem Behälter vorgesehen ist, die wenigstens aus einem von außerhalb des Behälters (1) im Bereich eines Domes durch den Außenbehälter (3) und die Superisolation hindurch in den Innenbehälter (4) führenden Rohr besteht, wobei das Rohr am Innenumfang des Außenbehälters (3) über eine Befestigungseinrichtung, an diesem wenigstens teilweise entlang verlaufend, so befestigt ist, dass sich, während eines Abblasvorgangs, das Rohr durchströmender, abzublasender Kraftstoff durch Wärmeleitung vom Außenbehälter her über die Befestigungseinrichtung so erwärmt, dass der Kraftstoff einem Verwertungssystem außerhalb des Behälters zugeführt werden kann, das wenigstens Leitungen besitzt, die für tiefkalten Kraftstoff nicht geeignet sind, wobei die Befestigungseinrichtung so gestaltet ist, dass das Rohr in Behälterquerrichtung verschieblich zum Außenbehälter (3) an diesem befestigt ist, **dadurch gekennzeichnet, dass** das Rohr mittels in Behälterquerrichtung gegeneinander verschieblichen Wärmeleitelementen (8, 8') am Außenbehälter (3) befestigt ist.

2. Behälter (1) nach Anspruch 1, **dadurch gekennzeichnet, dass** dieser ein Kryodruck-Tank ist, in dem kryogener Wasserstoff, zur Versorgung eines Verbrauchers, insbesondere einer Brennkraftmaschine und/ oder einer Brennstoffzelle eines Kraftfahrzeugs, unter überkritischem Druck, bei 13 bar oder mehr, gespeichert werden kann.

## Claims

1. A container (1) for low-temperature cryogenic storage of fuel, formed by an outer container (3) and an inner container (4) of cylindrical cross-section with dome-shaped ends, wherein at least one super-insulating means and a device for filling gaseous fuel into and removing and blowing off gaseous fuel from the container are provided in the gap between outer container (3) and inner container (4), which device comprises at least of a pipe leading from outside the container (1) in the region of a dome, through the outer container (3) and the super-insulating means, into the inner container (4), wherein the pipe is fastened to the inner circumference of the outer container (3) via a fastening device, the pipe extending at least partially along said inner circumference of the outer container, wherein, during a blow-off operation, fuel that is flowing through the pipe and that is to be blown off is heated by thermal conduction from the outer container via the fastening device, such that the fuel can be fed to a utilisation system outside the container, which system at least has lines that are not suitable for low-temperature fuel, wherein the fastening device is designed such that the pipe is fastened to the outer container (3) so as to be displaceable relative thereto in the transverse direction of the container, **characterised in that** the pipe is fastened to the outer container (3) by means of heat-conductive elements (8, 8') that are displaceable relative to one another in the transverse direction of the container.

2. A container (1) according to claim 1, **characterised in that** said container is a cryopressure tank, in which cryogenic hydrogen can be stored for supplying a consumer, more especially an internal combustion engine and/or a fuel cell of a motor vehicle, under subcritical pressure, at 13 bar or more.

## Revendications

1. Réservoir (1) de stockage de carburant cryogénique à très basse température constitué d'un réservoir externe (3) et d'un réservoir interne (4) de section cylindrique ayant des extrémités en forme de dôme, dans lequel il est prévu, dans le volume intermédiaire entre le réservoir externe (3) et le réservoir interne (4) au moins une super isolation et un dispositif de remplissage et de soutirage ainsi que de dégazage du carburant gazeux, qui est au moins constitué par un tube s'étendant à partir de l'extérieur du réservoir (1) dans la zone d'un dôme, en passant au travers du réservoir externe (3) et de la super isolation jusqu'au réservoir interne (4), ce tube étant fixé à la périphérie interne du réservoir externe (3) par l'intermédiaire d'un dispositif de fixation s'étendant au moins partiellement le long de celui-ci, de sorte que, pendant un processus de dégazage le carburant qui s'échappe au travers du tube soit chauffé par transfert de chaleur à partir du réservoir externe par l'intermédiaire du dispositif de fixation pour que le carburant puisse être transféré vers un système de valorisation, à l'extérieur du réservoir, qui comporte au moins des conduites non adaptées à du carburant à très basse température, le dispositif de fixation étant réalisé de sorte que le tube soit fixé au réservoir externe (3) en étant mobile en translation par rapport à celui-ci dans la direction transversale du réservoir,
**caractérisé en ce que**
le tube est fixé au réservoir externe (3) au moyen d'éléments de transfert de chaleur (8, 8') mobiles en translation les uns par rapport aux autres dans la direction transversale du réservoir.

2. Réservoir (1) conforme à la revendication 1,
**caractérisé en ce qu'**
il est constitué par un réservoir cryogénique sous pression dans lequel de l'hydrogène cryogénique destiné à alimenter un consommateur, en particulier un moteur à combustion interne et/ou une cellule électrochimique d'un véhicule peut être stocké sous une pression hypercritique de 13 bar ou plus.
